# EUROPÄISCHE PATENTSCHRIFT

(11) **EP 2 661 155 B1**
(45) Veröffentlichungstag und Bekanntmachung des Hinweises auf die Patenterteilung: **03.07.2019**
(21) Anmeldenummer: 13165370.1
(22) Anmeldetag: 25.04.2013
(51) Int. Cl.: H05B 37/02

(54) **Multifunktionale Sensoreinheit und Verfahren zur Justierung der Einheit**
Multifunctional sensor unit and method for the adjustment of said unit
Unité de détection multifonction et procédé d'ajustage de l'unité

(30) Priorität: 30.04.2012 DE 102012207170
(43) Veröffentlichungstag der Anmeldung: 06.11.2013
(73) Patentinhaber: Zumtobel Lighting GmbH, 6850 Dornbirn (AT)
(72) Erfinder: Werner, Walter, 6850 Dornbirn (AT)
(74) Vertreter: Thun, Clemens

(56) Entgegenhaltungen:
- EP-A1- 1 952 778
- WO-A1-99/30182
- WO-A1-2011/124722
- US-A1- 2007 242 034
- US-A1- 2011 199 020

## Beschreibung

Die vorliegende Erfindung betrifft ein Verfahren zum Justieren bzw. Konfigurieren einer multifunktionalen Sensoreinheit, welche dazu vorgesehen ist, Kontrollinformationen zur Verwendung in der Lichtsteuerung zu ermitteln. Ferner betrifft die vorliegende Erfindung eine entsprechende multifunktionale Sensoreinheit.

Der Einsatz von Sensoren zur Steuerung von Beleuchtungseinrichtungen ist seit langer Zeit bekannt. Ist beispielsweise gewünscht, dass innerhalb eines Raums bzw. eines zu beleuchtenden Bereichs eine bestimmte Helligkeit vorliegt, so kann dieses Ziel in der Regel lediglich dadurch erreicht werden, dass Informationen über die aktuell vorliegende Helligkeit ermittelt und bei der Ansteuerung des Kunstlichts, also einer oder mehrerer Leuchten berücksichtigt werden. Auch eine entsprechend automatisierte Ansteuerung von Abschattungseinrichtungen wie Jalousien oder dergleichen erfolgt in der Regel dadurch, dass mit Hilfe von Sensoren das auf die Fassade des Gebäudes auftreffende Außenlicht ermittelt wird. Schließlich ist zum Realisieren einer energieeffizienten Beleuchtung oftmals vorgesehen, dass die Helligkeit innerhalb eines Bereichs lediglich dann erhöht wird oder überhaupt die Beleuchtung aktiviert wird, wenn festgestellt wird, dass sich in diesem Bereich auch tatsächlich Personen aufhalten bzw. bewegen.

Grundsätzlich gesehen gibt es also verschiedene Arten von Sensoren, über welche bestimmte Bereiche eines Raums überwacht bzw. beurteilt werden, um dann entsprechende Kontrollinformationen für die eigentliche Steuerung der Beleuchtung und dergleichen zu erhalten.

Da bei einer komplexeren Beleuchtungssteuerung oftmals innerhalb eines einzigen Raums mehrere zu überwachende Bereiche vorliegen und zusätzlich neben Helligkeitsinformationen auch Informationen über die Anwesenheit von Personen gesammelt werden müssen, ist bei einer klassischen Vorgehensweise, bei der jeder Bereich von einem eigenen Sensor überwacht wird, der Einsatz einer Vielzahl entsprechender Sensoren erforderlich. Dies ist selbstverständlich einerseits mit einem hohen Kostenaufwand sowie andererseits mit einem hohen Aufwand bezüglich der Montage der Sensoren und Anbindung dieser an das gesamte System verbunden.

Um eine derartige Problematik zu umgehen, wird deshalb in der WO 2011/124722 A1 der Einsatz einer so genannten multifunktionalen Sensoreinheit vorgeschlagen.

Vereinfacht gesagt weist diese multifunktionale Sensoreinheit Mittel zum Erfassen von Bildinformationen des zu überwachenden Raums bzw. Bereichs auf, in der Regel einen optischen Digitalsensor, wobei dann diese Bildinformationen ausgewertet werden, um Informationen über die aktuell vorliegende Helligkeit innerhalb des Raums zu erhalten und/oder die Anwesenheit bzw. Bewegung von Personen festzustellen. Hierbei werden also die von dem Digitalsensor zur Verfügung gestellten Bildinformationen analysiert, um daraus wiederum Steuerinformationen für die Lichtsteuerung zu gewinnen. Dabei wird allerdings in der Regel nicht das gesamte von dem Digitalsensor erfasste Bild bewertet, sondern es werden einzelne so genannte Bewertungsbereiche definiert, die hinsichtlich der Lichtsteuerung unterschiedliche Funktionen erfüllen. So kann beispielsweise ein erster Bewertungsbereich dahingehend ausgewertet werden, dass die in diesem Bereich vorliegende Helligkeit als Steuerinformation zum Dimmen derjenigen Leuchten genutzt wird, welche für die Beleuchtung dieses Bereichs zuständig sind. In diesem Fall wird also die diesem Bereich zugehörige Bildinformation dahingehend ausgewertet, dass eine Helligkeitsinformation gewonnen wird. Ein anderer Bewertungsbereich wiederum kann dazu genutzt werden, die Anwesenheit von Personen festzustellen, um generell die entsprechende Beleuchtung des Raums zu aktivieren bzw. zu deaktivieren. Die Bildinformationen dieses Bereichs werden dann also im Hinblick auf die Frage ausgewertet, ob zeitliche Veränderungen darauf schließen lassen, dass hier eine Bewegung vorliegt bzw. Personen anwesend sind. Der in der oben genannten Schrift beschriebene multifunktionale Sensor kann also aufgrund der Definition der verschiedenen Bewertungsbereiche gleichzeitig die Funktion einer Vielzahl einzelner Sensoren erfüllen.

Beim Stand der Technik ist vorgesehen, dass die einzelnen Bewertungsbereiche des multifunktionalen Sensors frei durch einen Benutzer vorgegeben werden können. Dies erfolgt dadurch, dass im Rahmen einer grafischen Benutzeroberfläche das von dem Sensor erfasste Bild angezeigt wird und dann der Benutzer durch ein entsprechendes Bedienelement einzelne Bewertungsbereiche festlegen bzw. definieren kann. Gleichzeitig wird durch den Benutzer vorgegeben, in welcher Art und Weise die Bildinformation des entsprechenden Bereichs auszuwerten ist bzw. welche Funktion dieser Bereich erfüllt. Hierdurch wird eine sehr komfortable Möglichkeit geschaffen, den Sensor an die tatsächlichen Gegebenheiten anzupassen.

Eine Schwierigkeit bei der oben beschriebenen Vorgehensweise, einzelne Bewertungsbereiche im Rahmen einer grafischen Benutzungsoberfläche zu definieren, besteht allerdings darin, dass hierfür das von dem Digitalsensor erfasste Bild an ein entsprechendes Gerät, beispielsweise einen PC oder dergleichen übermittelt werden muss. Die Sensoreinheit muss also entsprechende Mittel aufweisen, um eine Bildübertragung zu ermöglichen, was einen höheren Aufwand nach sich zieht. Insbesondere stellt eine derartige Ankopplung an z.B. einen PC dann ein Problem dar, wenn der Sensor an einer nur schwer zugänglichen Position angeordnet wird, beispielsweise an der Decke einer Halle oder dergleichen.

Die Übermittlung des Bildes stellt darüber hinaus auch aus Datenschutzgründen ein Problem dar, da mit einem entsprechenden Sensor oftmals auch öffentliche Räume oder dergleichen überwacht werden. In derartigen Fällen sollte ausgeschlossen werden, dass durch Unbefugte die von dem Digitalsensor erfassten Bilder abgegriffen werden können. Die zuvor beschriebenen Maßnahmen, über welche ein Definieren einzelner Bewertungsbereiche ermöglicht wird, stellen allerdings gerade die Grundlage dafür dar, dass Bildinformationen von dem Sensor abgerufen werden können.

Des Weiteren kann der WO 99/30182 A1 ein System zum Bestimmen der räumlichen Position und Orientierung einer Mehrzahl von Körpern entnommen werden.

Der vorliegenden Erfindung liegt die Aufgabenstellung zugrunde, eine Lösung anzugeben, mit der die oben geschilderten Probleme vermieden werden können. Insbesondere soll bei einer derartigen multifunktionalen Sensoreinheit die Möglichkeit bestehen, einzelne Bewertungsbereiche oder aber auch Bereiche, die bei dem Berechnen der Kontrollinformationen zu ignorieren sind, zu definieren, ohne dass hierfür die Übermittlung der gesamten erfassten Bildinformationen zu einer externen Einheit erforderlich wäre.

Die Aufgabe wird durch ein Verfahren zum Justieren einer multifunktionalen Sensoreinheit gemäß Anspruch 1 sowie durch eine multifunktionale Sensoreinheit gemäß Anspruch 7 gelöst. Vorteilhafte Weiterbildungen der Erfindung sind Gegenstand der abhängigen Ansprüche.

Die erfindungsgemäße Lösung beruht auf dem Gedanken, einzelne so genannte Bewertungsbereiche oder Bereiche, welche beim Berechnen der Kontrollinformationen zu ignorieren sind, mit Hilfe einer so genannten Positionsgeber-Einheit anzuzeigen. Bei der Positionsgeber-Einheit handelt es sich vorzugsweise um ein tragbares Gerät, welches eine optische Kennung abgibt und von einem Benutzer derart im Bildbereich des Digitalsensors angeordnet wird, dass beim Auswerten der Bildinformationen die Positionsgeber-Einheit erkannt wird. Diese Position der Positionsgeber-Einheit wird dann dazu genutzt, die Anordnung und räumliche Ausdehnung eines Bewertungsbereich bzw. eines zu ignorierenden Bereichs festzulegen. Dementsprechend kann ein Benutzer in einfacher Weise Bereiche anzeigen, die dann von der Sensoreinheit in spezieller Weise berücksichtigt bzw. bewertet werden, ohne dass er hierzu das von dem Digitalsensor erfasste Bild sehen muss.

Erfindungsgemäß wird dementsprechend ein Verfahren zum Justieren einer multifunktionalen Sensoreinheit vorgeschlagen, welche zum Ermitteln von Kontrollinformationen zur Verwendung in der Lichtsteuerung vorgesehen ist und einen bildauflösenden Digitalsensor, eine dem Digitalsensor zugeordnete Optik sowie eine Recheneinheit aufweist, welche dazu ausgebildet ist, auf Basis der von dem Digitalsensor erfassten Bildinformationen die Kontrollinformationen zu berechnen, wobei die Recheneinheit ferner dazu ausgebildet ist, die einem Bewertungsbereich zugeordneten Bildinformationen auszuwerten und wobei der Bewertungsbereich ein Teilbereich des von dem Digitalsensor und der Optik erfassten gesamten Bildbereichs ist. Dabei ist vorgesehen, dass zum Definieren eines Bewertungsbereichs oder eines beim Berechnen der Kontrollinformationen zu ignorierenden Bereichs eine Positionsgeber-Einheit in dem von dem Digitalsensor und der Optik erfassten Bildbereich positioniert wird und die Sensoreinheit eine von der Positionsgeber-Einheit abgegebene optische Kennung erfasst und auf Basis dieser erfassten Kennung einen Bewertungsbereich oder einen zu ignorierenden Bereich festlegt.

Ferner wird erfindungsgemäß eine multifunktionale Sensoreinheit zum Ermitteln von Kontrollinformationen vorgeschlagen, wobei die Sensoreinheit einen bildauflösenden Digitalsensor, eine dem Digitalsensor zugeordnete Optik sowie eine Recheneinheit aufweist, welche dazu ausgebildet ist, auf Basis der von dem Digitalsensor erfassten Bildinformationen die Kontrollinformationen zu berechnen, wobei die Recheneinheit ferner dazu ausgebildet ist, die einem Bewertungsbereich zugeordneten Bildinformationen zum Berechnen der Kontrollinformationen auszuwerten und wobei der Bewertungsbereich ein Teilbereich des von dem Digitalsensor und der Optik erfassten gesamten Bildbereichs ist. Erfindungsgemäß ist die Recheneinheit ferner auch dazu ausgebildet, in den erfassten Bildinformationen eine optische Kennung einer sich in dem Bildbereich befindlichen Positionsgeber-Einheit zu erfassen und auf Basis dieser erfassten Kennung einen Bewertungsbereich oder einen Bereich, der beim Berechnen der Kontrollinformationen zu ignorieren ist, festzulegen.

Wie bereits eingangs erwähnt besteht ein besonderer Vorteil der multifunktionalen Sensoreinheit auch darin, dass verschiedene Bewertungsbereiche unterschiedlich analysiert werden können, beispielsweise um einerseits Helligkeitsinformationen zu erhalten und andererseits Bewegungen zu erkennen. Es ist deshalb vorgesehen, dass während des Definierens eines Bewertungsbereichs gleichzeitig auch die Übermittlung einer Zusatzinformation erfolgt, wobei dann die Sensoreinheit dazu ausgebildet ist, die Bildinformationen eines Bewertungsbereichs zum Berechnen der Kontrollinformationen abhängig von dieser Zusatzinformation auszuwerten. Dabei kann die Zusatzinformation beispielsweise im Rahmen der optischen Kennung übermittelt werden. Alternativ hierzu könnte diese Zusatzinformation allerdings auch getrennt von der optischen Kennung, beispielsweise durch ein Funksignal oder dergleichen übermittelt werden. In jedem Fall wird allerdings wiederum hierfür die Positionsgeber-Einheit verwendet. Sollte dabei die Zusatzinformation in der optischen Kennung hinterlegt werden, so ist vorzugsweise vorgesehen, dass zum Anzeigen eines Bewertungsbereichs die Positionsgeber-Einheit ein optisches Signal abgibt und dieses optische Signal abhängig von der Zusatzinformation zusätzlich - beispielsweise im Hinblick auf die Farbe und/oder Intensität - modifiziert wird.

Das Definieren eines Bewertungsbereichs bzw. eines zu ignorierenden Bereichs kann dabei beispielsweise dadurch erfolgen, dass mit Hilfe der Positionsgeber-Einheit dieser Bereich vollständig umrundet wird oder dessen Eckpunkte vorgegeben werden. In diesem Fall kann äußerst flexibel durch einen Benutzer die Anordnung, Größe oder auch die Form eines entsprechenden Bereichs vorgegeben werden. In einer alternativen, insbesondere einfachen Variante wäre es allerdings auch denkbar, dass die Position der Positionsgeber-Einheit das Zentrum eines entsprechenden Bereichs vorgibt und dieser dann sich in einem gewissen Umkreis von diesem Zentrum erstreckt.

Die gemäß der vorliegenden Erfindung zum Einsatz kommende Positionsgeber-Einheit ist wie bereits erwähnt derart ausgestaltet, dass sie in einer einfachen Weise durch einen Benutzer gehandhabt werden kann. Es sollte sich also insbesondere um ein tragbares Gerät handeln, welches zur Abgabe eines optischen Signals ausgebildet ist. Denkbar hierfür wäre beispielsweise ein Gerät in Art einer Taschenlampe, wobei das optische Signal dann entsprechend durch die Elektronik modifiziert wird, um die Zusatzinformation zu übermitteln. Allerdings wäre auch die Verwendung eines Mobiltelephongeräts oder dergleichen denkbar, welches zum Darstellen eines Signals auf dem Display ausgebildet ist.

Nachfolgend soll die Erfindung anhand der beiliegenden Zeichnung näher erläutert werden. Es zeigen:
- Figur 1: schematisch einen Raum, in dem eine multifunktionale Sensoreinheit zum Einsatz kommt;
- Figur 2: das von dem bildauflösenden Digitalsensor der Sensoreinheit erfasste Bild bei einer Deckenmontage; und
- Figur 3: die erfindungsgemäße Vorgehensweise zum Festlegen der Bewertungsbereiche bei dem Anwendungsbeispiel der Figuren 1 und 2.

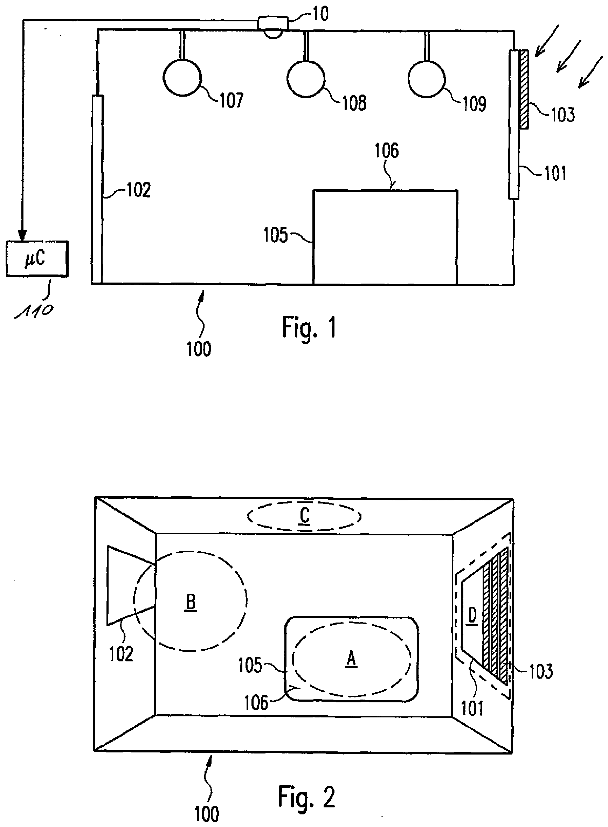

Die grundsätzliche Funktionsweise einer multifunktionalen Sensoreinheit soll zunächst anhand der Figuren 1 und 2, welche ein Anwendungsbeispiel darstellen, erläutert werden. Ergänzend hierzu wird beispielsweise auf die bereits erwähnte WO 2011/124722 A1 verwiesen.

Bei dem Anwendungsbeispiel der Figuren 1 und 2 sollen die innerhalb eines Raums 100 angeordneten Leuchten 107 bis 109 in geeigneter Weise angesteuert werden, wobei der Raum 100 ein Fenster 101, über welches Außenlicht eintreten kann, sowie eine Tür 102 aufweist. An dem Fenster 101 ist eine steuerbare Blendschutzeinrichtung in Form einer Jalousie 103 angeordnet. Die Steuerung der Leuchten 107 bis 109 sowie der Jalousie 103, der sogenannten Aktoren, erfolgt durch eine Lichtsteuereinheit 110, welche über - hier nicht näher dargestellte - Steuerleitungen mit den Aktoren verbunden ist. Die Ansteuerung erfolgt hierbei auf Basis von Kontrollinformationen, welche über den aktuellen Istzustand der Raumbeleuchtung informieren.

Im dargestellten Beispiel ist nunmehr erwünscht, dass verschiedene Bereiche des Raums 100 in unterschiedlicher Weise ausgeleuchtet werden. So ist beispielsweise zunächst auf der Oberfläche 106 eines Tischs 105 eine erste Helligkeit erwünscht, welche das Arbeiten ermöglicht. Im Bereich der Eingangstüre 102 hingegen soll eine andere, zweite Helligkeit vorliegen. Schließlich soll auch noch ein bestimmter Bereich der Wand gezielt mit einer dritten Helligkeit ausgeleuchtet werden, um beispielsweise ein daran befindliches Bild oder allgemein ein Objekt in besonderer Weise auszuleuchten. Dabei soll der Einfluss des durch das Fenster 101 einfallenden Lichts berücksichtigt werden. Gleichzeitig soll die Aktivierung der Leuchten 107 bis 109 nur dann erfolgen, wenn eine Person den Raum 100 betritt bzw. sich in dem Raum befindet.

Zur Lösung dieser Aufgabenstellung wäre bei Verwendung von Einzelsensoren eine Vielzahl von Sensoren erforderlich, welche einerseits auf die verschiedenen Bereiche gerichtet werden und andererseits die Anwesenheit einer Person erkennen. Mit Hilfe der multifunktionalen Sensoreinheit hingegen können alle zuvor genannten Aufgaben von einer einzigen Einheit erfüllt werden.

Diese Sensoreinheit ist bei dem Beispiel von Figur 1 an der Decke des Raums 100 angeordnet. Sie erfasst nicht einfache Helligkeitswerte sondern stattdessen ein - möglichst vollständiges - Bild des Raums 100 und berechnet auf Basis der Bildinformationen dann die erforderlichen Kontrollinformationen. Die Sensoreinheit 10 weist hierfür drei wesentliche Komponenten auf, einen bildauflösenden Digitalsensor, eine dem Digitalsensor zugeordnete Optik sowie eine Recheneinheit, welche auf Basis der Bildinformationen die Kontrollinformationen berechnet.

Die Optik der Sensoreinheit 10 ist hierbei derart, dass ein möglichst großer Bildbereich erfasst wird. Insbesondere beinhaltet die Optik ein Weitwinkelobjektiv, beispielsweise eine sogenannte Fisheye-Optik. Bei der Deckenmontage wird hierbei nahezu der gesamte Raum erfasst, wie in Figur 2 erkennbar ist. Dieses von dem bildauflösenden Digitalsensor erfasste Bild wird dann an die Recheneinheit weitergeleitet, welche das Bild bewertet bzw. analysiert und darauf basierend die Kontrollinformationen ermittelt und an die Lichtsteuereinheit 110 überträgt. Hierbei wird allerdings nicht der gesamte Bildbereich ausgewertet. Stattdessen werden einzelne sogenannte Bewertungsbereiche definiert, welche näher untersucht werden, um die gewünschten Kontrollinformationen zu erhalten.

Ausgehend von der oben geschilderten Aufgabenstellung werden dementsprechend im vorliegenden Fall vier Bewertungsbereiche definiert, welche durch die Recheneinheit näher analysiert werden:
- der erste Bewertungsbereich A umfasst hierbei die Oberfläche 106 des Tischs 105;
- ein zweiter Bereich B umfasst den Eingangsbereich in der Nähe der Tür 102;
- ein dritter Bereich C umfasst jenen Bereich der Wand, der - wie zuvor erwähnt - speziell ausgeleuchtet werden soll;
- zur Berücksichtigung des Außenlichts wird ferner ein vierter Bereich D definiert, der das Fenster 101 mit der daran angeordneten Jalousie 103 umfasst.

Die Recheneinheit der erfindungsgemäßen Sensoreinheit bewertet nunmehr also die den vier Bewertungsbereichen A bis D zugeordneten Bildinformationen, während hingegen die weiteren Bereiche des insgesamt erfassten Bilds ignoriert werden. Der Aufwand bei der Verarbeitung der Bilddaten kann hierdurch deutlich reduziert werden. Die Ergebnisse der Bilddatenverarbeitung werden dann als Kontrollinformationen an die Lichtsteuereinheit 110 übermittelt. Bei der Bewertung des ersten Bereichs A, der mit einer gewünschten Helligkeit ausgeleuchtet werden soll, ermittelt dementsprechend die Recheneinheit die in dem Bereich A vorliegende Helligkeit und gibt diese als Kontrollinformation bzw. Istwert an die Lichtsteuereinheit 110 weiter. In gleicher Weise werden auch die Bilddaten des Bereichs C zum Erhalten eines Helligkeits-Istwerts ausgewertet.

Der zweite Bereich B hingegen wird durch die Recheneinheit in zweierlei Hinsicht ausgewertet. Zum Einen wird auch hier die Helligkeit ermittelt, da hier die Ausleuchtung des Bereichs mit einer anderen Helligkeit gewünscht ist. Zum Anderen allerdings werden die Bilddaten auch dahingehend analysiert, ob die Bewegung eines Objekts festgestellt wird. Das heißt, die Recheneinheit liefert nach Analyse der Bilddaten des Bereichs C sowohl Informationen, die von einem klassischen Helligkeitssensor zur Verfügung gestellt werden, als auch Informationen, welche von einem Anwesenheits- oder Bewegungssensor zur Verfügung gestellt werden.

Schließlich analysiert die Recheneinheit auch die dem Bereich D zugehörigen Bildinformationen, um Kontrollinformationen bzgl. des einfallenden Außenlichts zu erhalten. Die Gesamtheit dieser Kontrollinformationen - nicht jedoch die ursprüngliche Bildinformation - wird an die Steuereinheit 110 weitergeleitet, welche dann darauf basierend die Lichtquellen 107 bis 109 sowie die Jalousie 103 ansteuert.

Ein besonderer Vorteil der Sensoreinheit 10 besteht dabei darin, dass die Bewertungsbereiche, welche von der Recheneinheit analysiert werden, frei innerhalb des erfassten Bildbereichs definiert werden können. Die Anzahl, Form, Größe als auch Position der Bewertungsbereiche kann in beliebiger Weise variiert und je nach Wunsch durch einen Benutzer vorgegeben werden. Dabei können die Bewertungsbereiche selbstverständlich auch überlappen. Das heißt, das System ist in komfortabler und einfacher Weise an unterschiedlichste Situationen oder Wünsche hinsichtlich der Beleuchtungssteuerung anpassbar, ohne dass die Sensoreinheit neu positioniert werden müsste.

Zum Definieren der verschiedenen Bewertungsbereiche A bis D war bislang vorgesehen, die Sensoreinheit 10 mit einer separaten Konfigurationseinheit, beispielsweise einem PC zu verbinden. Dies konnte beispielsweise im Rahmen einer USB-Verbindung vorgenommen werden, wobei die Sensoreinheit 10 hierzu einen entsprechenden Anschluss aufwies. Im Rahmen einer grafischen Benutzeroberfläche wurde dann beispielsweise das insgesamt von dem Sensor erfasste Bild dargestellt, wobei dann durch den Benutzer die einzelnen Bereiche markiert werden und ihnen bestimmte Funktionen zugeordnet werden konnten. So konnte - wie zuvor beschrieben - festgelegt werden, ob ein bestimmter Bereich in erster Linie zur Ermittlung von Helligkeitsinformationen benutzt werden soll und/oder einer Ermittlung von Informationen bezüglich der Anwesenheit von Personen dient.

Das für eine derartige Justierung der Sensoreinheit 10 vorgesehene Verbinden mit einem PC kann allerdings recht aufwendig sein, insbesondere wenn sich die Sensoreinheit 10 an einer nur schwer zugänglichen Position, beispielsweise einer Decke eines hohen Raums befindet. Darüber hinaus stellt das Übermitteln von Bildinformationen von der Sensoreinheit 10 zu einem anderen Gerät auch grundsätzlich ein Problem dar, da aus Datenschutzgründen vermieden werden sollte, dass entsprechende Bilddaten von unbefugten Personen abgegriffen werden können. Allerdings würde das Vorhandensein beispielsweise des oben genannten USB-Anschlusses oder einer anderen Schnittstelle zur Bildübertragung für Dritte bereits grundsätzlich Möglichkeiten eröffnen, entsprechende Daten zu erhalten.

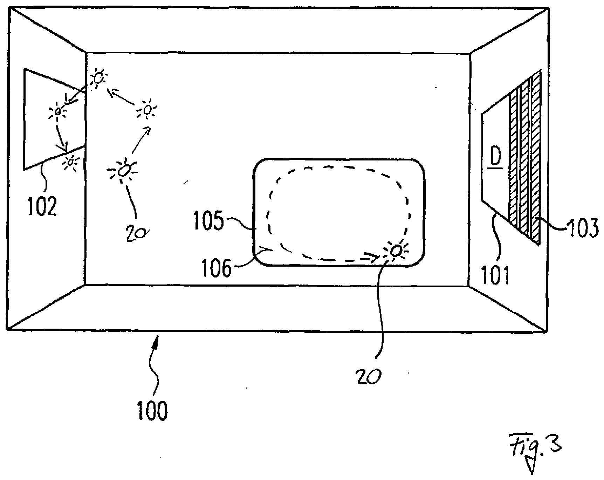

Mit der vorliegenden Erfindung wird zur Lösung dieses Problems eine neuartige Vorgehensweise zum Definieren der Bewertungsbereiche vorgeschlagen, bei der das Übermitteln von Bildinformationen nicht mehr erforderlich ist. Die Sensoreinheit 10 kann also derart gestaltet werden, dass sie grundsätzlich keine Bildinformationen nach außen gibt. Stattdessen werden die Bildinformationen intern verarbeitet und lediglich die daraus abgeleiteten Anwesenheits- und/oder Helligkeitsinformationen ausgegeben. Diese erfindungsgemäße Lösung soll nachfolgend anhand von Figur 3 näher erläutert werden.

Der erfindungsgemäße Gedanke beruht auf der Idee, mittels einem von einem Benutzer handhabbaren Geräts der Sensoreinheit 10 anzuzeigen, welche Bereiche zum Ermitteln der Steuerinformationen analysiert werden sollen. Dieses Gerät, welches nachfolgend als Positionsgeber-Einheit bezeichnet wird und in Figur 3 mit dem Bezugszeichen 20 versehen ist, zeigt der Sensoreinheit 10 auf optischem Wege an, an welcher Stelle innerhalb des Raums bzw. des von der Optik der Sensoreinheit 10 erfassten Bereichs sich diese Bewertungsbereiche befinden und kann auch dazu genutzt werden, näher zu definieren, in welcher Weise diese Bewertungsbereiche ausgewertet werden sollen. Es handelt sich also insbesondere um ein tragbares Gerät, welches ein optisches Signal bzw. eine optische Kennung abgibt, welche von der Sensoreinheit 10 erkannt wird.

In einem einfachen Ausführungsbeispiel kann es sich hierbei um ein Gerät ähnlich einer Taschenlampe handeln, welches von dem Benutzer betätigt wird und dann ein Lichtsignal abgibt. Entsprechend der schematischen Darstellung von Figur 3 kann dann der Benutzer beispielsweise die Positionsgeber-Einheit 20 im Bereich des Tischs 105 positionieren und insbesondere am Umfang der Tischfläche 106 entlang bewegen, wie dies durch den gestrichelten Pfeil dargestellt ist. Die Sensoreinheit 10, genauer gesagt die Recheneinheit zum Analysieren der Bildinformationen - erkennt die Position dieser Positionsgeber-Einheit 20 bzw. zeichnet die Bewegung der Einheit 20 auf und interpretiert dies dahingehend, dass der von der Positionsgeber-Einheit 20 umrundete Bereich einen speziell zu berücksichtigen Bewertungsbereich - hier den Bereich A - darstellt. In gleicher Weise können mit Hilfe der Positionsgeber-Einheit 20 dann auch die weiteren Bewertungsbereiche B bis D angezeigt werden.

Vorzugsweise ist die Positionsgeber-Einheit 20 derart ausgestaltet, dass ergänzend zu der von der Sensoreinheit 10 erfassten Ortsinformation eine weitere Zusatzinformation übermittelt wird, welche die Funktion des jeweils angezeigten Bereichs näher definiert. Wie oben erwähnt sollen in der Regel unterschiedliche Bereiche auch in unterschiedlicher Weise bewertet werden, weshalb zu einer vollständigen Definition eines Bewertungsbereichs es auch erforderlich ist, der Sensoreinheit 10 mitzuteilen, wie bzw. in welcher Weise die Bildinformationen des jeweiligen Bereichs zu bewerten sind.

Dabei wären zwei unterschiedliche Möglichkeiten zum Übermitteln dieser Zusatzinformationen denkbar. Eine erste Variante besteht darin, die optische Kennung, also das von der Positionsgeber-Einheit 20 abgegebene Licht zu modifizieren, wobei diese Modifikation dann auch die Zusatzinformation beinhaltet. Beispielsweise könnte durch eine Veränderung des zeitlichen Verlaufs der Intensität des Lichts die Zusatzinformation codiert werden. Auch eine entsprechende Farbveränderung des abgegebenen Lichts wäre denkbar, um die Zusatzinformation zu übermitteln. An der Positionsgeber-Einheit 20 sind in diesem Fall entsprechende Auswahlschalter oder Bedienelemente vorhanden, welche nicht nur die generelle Abgabe der optischen Kennung aktivieren sondern darüber hinaus auch dem Benutzer die Möglichkeit eröffnen, den Inhalt dieser Zusatzinformation auszuwählen. Dabei kann die Zusatzinformation durchaus auch angeben, dass der entsprechende Bereich hinsichtlich seiner Helligkeitswerte und im Hinblick auf eine evtl. Bewegung oder Anwesenheit von Personen ausgewertet werden soll, wie dies bei dem Bereich B der Fall sein soll.

Alternativ zu einer Codierung der Zusatzinformation über die Lichtabgabe wäre es allerdings auch denkbar, dass die Zusatzinformation getrennt von der optischen Kennung übermittelt wird. Selbstverständlich ist auch hier eine drahtlose Übermittlung der Zusatzinformation vorgesehen, weshalb sich in erster Linie die Übermittlung von Funkt- oder Infrarotsignalen anbieten würde.

Mit Hilfe dieser Zusatzinformation kann dabei im Übrigen nicht nur festgelegt werden, ob ein entsprechend definierter Überwachungsbereich im Hinblick auf seine Helligkeit und/oder die Anwesenheit von Personen analysiert werden soll. Selbstverständlich bestünde auch die Möglichkeit, speziell Bereiche zu markieren, die grundsätzlich von einer Bewertung durch die Sensoreinheit 10 ausgeschlossen werden sollen. Auf diesem Wege wäre es beispielsweise auch denkbar, zuvor definierte Bewertungsbereiche wieder zu löschen.

Des Weiteren kann die Übermittlung der Zusatzinformation auch dazu genutzt werden, einen Justier- bzw. Konfigurationsmodus der Sensoreinheit 10 zu starten. Bei Erfassen der optischen Kennung bzw. bei Empfang einer entsprechenden Startinformation kann dann die Sensoreinheit 10 in einen Konfigurationsmodus wechseln, in dem durch den Benutzer dann wie zuvor beschrieben die verschiedenen Bewertungsbereiche vorgegeben werden können. Dabei ist gemäß einem besonders bevorzugten Ausführungsbeispiel vorgesehen, dass durch die Sensoreinheit 10 eine Rückmeldung für den Benutzer dahingehend erfolgt, ob das jeweilige Definieren eines Bereichs bzw. eines zu ignorierenden Bereichs erfolgreich war. Dies könnte beispielsweise mit Hilfe entsprechender Status-LEDs, die an dem Gehäuse der Sensoreinheit 10 angeordnet sind, signalisiert werden. Auch könnte mit Hilfe derartiger LEDs angezeigt werden, dass sich die Sensoreinheit 10 in dem Konfigurationsmodus befindet.

Durch die zuvor beschriebene Vorgehensweise wird also vermieden, dass die Sensoreinheit 10 über ein Kabel mit einem externen Gerät verbunden werden muss und ferner vollständige Bildinformationen übermittelt werden. Der Benutzer muss stattdessen lediglich die Positionsgeber-Einheit 20 aktivieren und dann den für die Lichtsteuerung interessanten Bereich markieren. Diese Art der Justierung der Sensoreinheit 10 ist sehr einfach und schnell durchzuführen und kann jederzeit ohne großen Aufwand neu vorgenommen werden, wenn aufgrund vorgenommener Änderungen innerhalb des Raums eine neue Festlegung der Bewertungsbereiche erforderlich ist.

Bei der zuvor beschriebenen Variante war vorgesehen, dass zum Definieren bzw. Festlegen eines Bewertungsbereichs dieser durch die Positionsgeber-Einheit 20 vollständig umrundet werden muss. Alternativ hierzu wäre es allerdings auch denkbar, mit Hilfe der Positionsgeber-Einheit 20 lediglich dessen Eckpunkte bzw. Ecken anzuzeigen, wie dies in Figur 3 bei dem Bereich B dargestellt ist. In diesem Fall würde die Positionsgeber-Einheit 20 einzeln an den Eckpunkten angeordnet und jeweils kurz aktiviert werden (alternativ hierzu könnte dann jeweils an diesen Stellen eine kurze Zusatzinformation in der oben beschriebenen Weise übermittelt werden), wobei dann nach Abschluss dieser Prozedur der jeweilige Bereich von der Sensoreinheit 10 selbst festgelegt wird. Schließlich wäre in einer besonders einfachen Variante auch denkbar, dass die Positionsgeber-Einheit 20 lediglich an einer einzigen Stelle positioniert wird, welche dann jeweils das Zentrum des entsprechenden Bereichs bildet. Innerhalb einer gewissen Umgebung, deren Erstreckung beispielsweise wiederum durch eine entsprechende Zusatzinformation vorgegeben werden könnte, liegt dann der jeweilige Bewertungsbereich. Das heißt, in diesem Fall ist zum Definieren eines bestimmten Bereichs die Positionsgeber-Einheit nur an einer einzigen Stelle anzuordnen. Die größte Freiheit bei der Gestaltung der Größe und Form eines Bewertungsbereichs besteht allerdings bei der eingangs beschriebenen Vorgehensweise, bei der ein Bereich vollständig umrundet wird.

Die erfindungsgemäße Vorgehensweise zum Definieren der räumlichen Ausgestaltung eines Bewertungsbereichs ist im Übrigen auch dann sinnvoll, wenn lediglich ein einziger Bewertungsbereich definiert werden soll. Ein vorteilhaftes Anwendungsbeispiel stellt eine automatisierte Straßenbeleuchtung dar, mit deren Hilfe z.B. der Bereich eines Fußgängerübergangs bei Anwesenheit von Personen verstärkt beleuchtet werden soll. In diesem Fall kommen in der Regel Sensoren zum Einsatz, die ein deutlich größeres Blickfeld umfassen als den eigentlichen Fußgängerübergang, wobei dann der Sensor wiederum derart konfiguriert bzw. justiert werden sollte, dass lediglich Personen im Bereich des Übergangs sowie im näheren Umfeld davon detektiert werden. Auch in diesem Fall kann in einfacher Weise ein entsprechender Bewertungsbereich definiert werden, in dem mit Hilfe der Positionsgeber-Einheit der entsprechend gewünschte Bereich umrundet wird. Dies ist sehr einfach und schnell durchzuführen, wobei wiederum auf eine unmittelbare Verbindung zu dem Sensor verzichtet werden kann.

Abschließend ist anzumerken, dass alternativ zur Verwendung eines separaten Geräts als Positionsgeber-Einheit auch denkbar wäre, hierzu ein entsprechendes Gerät mit einem Display zu verwenden, über das dann optische Informationen angezeigt werden, die von der Sensoreinheit erkannt und entsprechend bewertet werden. Insbesondere wäre die Benutzung eines Mobilfunktelephons oder dergleichen denkbar, da ein derartige Gerät oftmals in der Lage ist, eine optische Information mit ausreichender Helligkeit auf dem Display anzuzeigen und darüber hinaus auch ggf. die entsprechenden Änderungen in dem optischen Signal, welche farblicher oder zeitlicher Natur sind, vorzunehmen, um die Zusatzinformation zu übermitteln. Durch ein entsprechendes Anwenderprogramm auf dem Telefon kann dieses also in einfacher Weise als erfindungsgemäße Positionsgeber-Einheit genutzt werden.

## Patentansprüche

1. Verfahren zum Justieren einer multifunktionalen Sensoreinheit (10), welche zum Ermitteln von Kontrollinformationen zur Verwendung in der Lichtsteuerung vorgesehen ist und aufweist:
a) einen bildauflösenden Digitalsensor,
b) eine dem Digitalsensor zugeordnete Optik sowie
c) eine Recheneinheit, welche dazu ausgebildet ist, auf Basis der von dem Digitalsensor erfassten Bildinformationen die Kontrollinformationen zu berechnen,
wobei die Recheneinheit ferner dazu ausgebildet ist, zum Berechnen der Kontrollinformationen die mindestens einem Bewertungsbereich (A, B, C, D) zugeordneten Bildinformationen auszuwerten, wobei der Bewertungsbereich (A, B, C, D) ein Teilbereich des von dem Digitalsensor und der Optik erfassten gesamten Bildbereichs ist,
**dadurch gekennzeichnet,**
**dass** zum Definieren eines Bewertungsbereichs (A, B, C, D) oder eines beim Berechnen der Kontrollinformationen zu ignorieren Bereichs
• eine Positionsgeber-Einheit (20) in dem von dem Digitalsensor und der Optik erfassten Bildbereich positioniert wird und
• die Sensoreinheit (10) eine von der Positionsgeber-Einheit (20) abgegebene optische Kennung erfasst und auf Basis dieser erfassten Kennung einen Bewertungsbereich oder einen Bereich, der beim Berechnen der Kontrollinformationen zu ignorieren ist, festlegt,
wobei die Sensoreinheit (10) dazu ausgebildet ist, die Bildinformationen eines Bewertungsbereichs (A, B, C, D) zum Berechnen der Kontrollinformationen abhängig von einer Zusatzinformation auszuwerten,
wobei die Übermittlung der Zusatzinformation durch die Positionsgeber-Einheit (20) zeitgleich mit dem Positionieren der Positionsgeber-Einheit (20) erfolgt.

2. Verfahren nach Anspruch 1,
**dadurch gekennzeichnet,**
**dass** die Zusatzinformation in der von der Positionsgeber-Einheit (20) abgegebenen optischen Kennung hinterlegt ist.

3. Verfahren nach Anspruch 2,
**dadurch gekennzeichnet,**
**dass** zum Hinterlegen der Zusatzinformation in der optischen Kennung ein von der Positionsgeber-Einheit (20) abgegebenes optisches Signal insbesondere hinsichtlich der Farbe und/oder Intensität modifiziert wird.

4. Verfahren nach Anspruch 1,
**dadurch gekennzeichnet,**
**dass** die Übermittlung der Zusatzinformation durch ein Funk- oder Infrarotsignal erfolgt.

5. Verfahren nach einem der vorherigen Ansprüche,
**dadurch gekennzeichnet,**
**dass** zum Definieren eines Bewertungsbereichs (A, B, C, D) oder eines beim Berechnen der Kontrollinformationen zu ignorieren Bereichs dieser mit der Positionsgeber-Einheit (20) vollständig umrundet wird oder mit Hilfe der Positionsgeber-Einheit (20) dessen Eckpunkte festgelegt werden.

6. Verfahren nach einem der Ansprüche 1 bis 4,
**dadurch gekennzeichnet,**
**dass** zum Definieren eines Bewertungsbereichs (A, B, C, D) oder eines beim Berechnen der Kontrollinformationen zu ignorieren Bereichs die Sensoreinheit (10) die Position der Positionsgeber-Einheit (20) als Zentrum des entsprechenden Bereichs festlegt.

7. Multifunktionale Sensoreinheit (10) zum Ermitteln von Kontrollinformationen zur Verwendung in der Lichtsteuerung,
wobei die Sensoreinheit (10) aufweist:
a) einen bildauflösenden Digitalsensor,
b) eine dem Digitalsensor zugeordnete Optik sowie
c) eine Recheneinheit, welche dazu ausgebildet ist, auf Basis der von dem Digitalsensor erfassten Bildinformationen die Kontrollinformationen zu berechnen,
wobei die Recheneinheit ferner dazu ausgebildet ist, zum Berechnen der Kontrollinformationen die mindestens einem Bewertungsbereich (A, B, C, D) zugeordneten Bildinformationen auszuwerten, wobei der Bewertungsbereich (A, B, C, D) ein Teilbereich des von dem Digitalsensor und der Optik erfassten gesamten Bildbereichs ist,
**dadurch gekennzeichnet,**
**dass** die Recheneinheit dazu ausgebildet ist, in den erfassten Bildinformationen eine optische Kennung einer sich in dem Bildbereich befindlichen Positionsgeber-Einheit (20) zu erfassen und auf Basis dieser erfassten Kennung einen Bewertungsbereich oder einen Bereich, der beim Berechnen der Kontrollinformationen zu ignorieren ist, festzulegen,
wobei die Sensoreinheit (10) dazu ausgebildet ist, eine Zusatzinformation von der Positionsgeber-Einheit (20) zu erfassen, durch welche definiert wird, in welcher Weise die Bildinformationen eines Bewertungsbereichs (A, B, C, D) zum Berechnen der Kontrollinformationen ausgewertet werden.

8. Sensoreinheit nach Anspruch 7,
**dadurch gekennzeichnet,**
**dass** die Sensoreinheit (10) dazu ausgebildet ist, die Zusatzinformation aus der optischen Kennung der Positionsgeber-Einheit (20) abzuleiten.

9. Sensoreinheit nach Anspruch 7,
**dadurch gekennzeichnet,**
**dass** die Sensoreinheit (10) eine Empfangseinheit aufweist, welche dazu ausgebildet ist, die Zusatzinformation getrennt vom Erfassen der optischen Kennung, insbesondere in Form eines Funk- oder Infrarotsignals zu empfangen.

10. System zur Lichtsteuerung, aufweisend eine multifunktionale Sensoreinheit (10) nach einem der Ansprüche 7 bis 9 sowie eine tragbare Positionsgeber-Einheit (20).

11. System nach Anspruch 10,
**dadurch gekennzeichnet,**
**dass** die tragbare Positionsgeber-Einheit (20) ein Mobilfunkgerät ist.

12. System nach Anspruch 10 oder 11,
**dadurch gekennzeichnet,**
**dass** es sich um ein System zur Steuerung einer Straßenbeleuchtung handelt.

## Claims

1. Method for adjusting a multifunctional sensor unit (10), which is provided to determine control information for use in lighting control and comprising:
a) an image-resolving digital sensor,
b) an optics associated the digital sensor, and
c) a computing unit which is designed to calculate the control information on the basis of the image information acquired by the digital sensor, wherein the arithmetic unit is further designed to calculate the control information in order to evaluate the image information associated with at least one evaluation area (A, B, C, D), wherein the evaluation area (A, B, C, D) is a partial area of the entire image area acquired by the digital sensor and the optics,
**characterized in that** to define an evaluation area (A, B, C, D) or to ignore an area when calculating the control information:
- a position transmitter unit (20) is positioned in the image area detected by the digital sensor and the optics, and
- the sensor unit (10) detects an optical identifier emitted by the position encoder unit (20) and, on the basis of this detected identifier, defines an evaluation area or an area to be ignored in calculating the control information,
wherein the sensor unit (10) is designed to evaluate the image information of an evaluation area (A, B, C, D) in order to calculate the control information depending on additional information,
wherein the transmission of the additional information by the position encoder unit (20) takes place simultaneously with the positioning of the position encoder unit (20).

2. Method according to claim 1, characterized the additional information is stored in the optical identifier output by the position encoder unit (20).

3. Method according to claim 2, **characterized in that** for storing the additional information in the optical identifier, an optical signal emitted by the position encoder unit (20) is modified, in particular with regard to color and/or intensity.

4. Method according to claim 1, **characterized in that** the transmission of the additional information is by a radio or infrared signal.

5. Method according to one of the preceding claims, **characterized in that** in order to define an evaluation area (A, B, C, D) or an area to be ignored in calculating the control information, this area is completely encircled by the position encoder unit (20), or its vertices are defined with the aid of the position encoder unit (20).

6. Method according to any one of claims 1 to 4, **characterized in that**, in order to define an evaluation area (A, B, C, D) or area to be ignored in calculating the control information, the sensor unit (10) sets the position of the position encoder unit (20) as the center of the corresponding area.

7. Multifunctional sensor unit (10) for determining control information for use in lighting control,
wherein the sensor unit (10) comprises:
a) an image-resolving digital sensor,
b) an optics associated with the digital sensor, and
c) a computing unit that is designed to calculate the control information on the basis of the image information acquired by the digital sensor, wherein the arithmetic unit is further designed to calculate the control information in order to evaluate the image information associated with at least one evaluation area (A, B, C, D), wherein the evaluation area (A, B, C, D) is a partial area of the entire image area acquired by the digital sensor and the optics, **characterized in that** the arithmetic unit is designed to record in the acquired image information an optical identifier of a position transmitter unit (20) located in the image area and to determine on the basis of this detected identifier an evaluation area or an area which is to be ignored when calculating the control information,
wherein the sensor unit (10) is designed to detect additional information from the position encoder unit (20), which defines how the image information of an evaluation area (A, B, C, D) is evaluated for calculating the control information.

8. Sensor unit according to claim 7, **characterized in that** the sensor unit (10) is designed to derive the additional information from the optical identifier of the position encoder unit (20).

9. Sensor unit according to claim 7, **characterized in that** the sensor unit (10) has a receiving unit which is designed to receive the additional information separately from the detection of the optical identifier, in particular in the form of a radio or infrared signal.

10. Lighting control system comprising a multifunctional sensor unit (10) according to any one of claims 7 to 9 and a portable position transmitter unit (20).

11. System according to claim 10, characterized that the portable position encoder unit (20) is a mobile device.

12. System according to claim 10 or 11, **characterized in that** it is a system for controlling street lighting.

## Revendications

1. Procédé d'ajustement d'une unité de capteur multifonctionnelle (10), qui est prévue pour la détermination d'informations de contrôle utilisées dans le contrôle de la lumière et qui comprend :
a) un capteur numérique à résolution d'images,
b) une optique correspondant au capteur numérique ainsi que
c) une unité de calcul qui est conçue pour calculer les informations de contrôle sur la base des informations d'images saisies par le capteur numérique,
l'unité de calcul étant en outre conçue pour calculer les informations de contrôle, analyser les informations d'images correspondant à au moins une zone d'évaluation (A, B, C, B), la zone d'évaluation (A, B, C, B) étant une partie de la zone d'image totale saisie par le capteur numérique et l'optique,
**caractérisé en ce que**
pour la définition d'une zone d'évaluation (A, B, C, D) ou d'une zone à ignorer lors du calcul des informations de contrôle
• une unité de capteur de position (20) est positionnée dans la zone d'image saisie par le capteur numérique et l'optique et
• l'unité de capteur (10) saisit une identification optique émise par l'unité de capteur de position (20) et détermine, sur la base de cette identification saisie, une zone d'évaluation ou une zone qui doit être ignorée lors du calcul des informations de contrôle,
l'unité de capteur (10) étant conçue pour analyser les informations d'images d'une zone d'évaluation (A, B, C, D) pour le calcul des informations de contrôle en fonction d'une information supplémentaire,
la transmission de l'information supplémentaire étant effectuée par l'unité de capteur de position (20) en même temps que le positionnement de l'unité de capteur de position (20).

2. Procédé selon la revendication 1,
**caractérisé en ce que**
l'information supplémentaire est enregistrée dans l'identification optique émise par l'unité de capteur de position (20).

3. Procédé selon la revendication 2,
**caractérisé en ce que**
pour l'enregistrement de l'information supplémentaire dans l'identification optique, un signal optique émis par l'unité de capteur de position (20) est modifié plus particulièrement en ce qui concerne la couleur et/ou l'intensité.

4. Procédé selon la revendication 1,
**caractérisé en ce que**
la transmission de l'information supplémentaire est effectuée par un signal radio ou infrarouge.

5. Procédé selon l'une des revendications précédentes,
**caractérisé en ce que**
pour la définition d'une zone d'évaluation (A, B, C, D) ou d'une zone à ignorer lors du calcul des informations de contrôle, celle-ci est contournée entièrement avec l'unité de capteur de position (20) ou ses vertex sont déterminés à l'aide de l'unité de capteur de position (20).

6. Procédé selon l'une des revendications 1 à 4,
**caractérisé en ce que**
pour la définition de la zone d'évaluation (A, B, C, D) ou d'une zone à ignorer lors du calcul des informations de contrôle, l'unité de capteur (10) détermine la position de l'unité de capteur de position (20) en tant que centre de la zone correspondante.

7. Unité de capteur multifonctionnelle (10) pour la détermination d'informations de contrôle utilisées dans le contrôle de la lumière,
l'unité de capteur (10) comprenant :
a) un capteur numérique à résolution d'images,
b) une optique correspondant au capteur numérique ainsi que
c) une unité de calcul qui est conçue pour calculer les informations de contrôle sur la base des informations d'images saisies par le capteur numérique,
l'unité de calcul étant en outre conçue pour calculer les informations de contrôle, analyser les informations d'images correspondant à au moins une zone d'évaluation (A, B, C, B), la zone d'évaluation (A, B, C, B) étant une partie de la zone d'image totale saisie par le capteur numérique et l'optique,
**caractérisée en ce que**
l'unité de calcul est conçue pour saisir, dans les informations d'images saisies, une identification optique d'une unité de capteur de position (20) se trouvant dans la zone d'image et pour déterminer, sur la base de cette identification optique, une zone d'évaluation ou une zone qui doit être ignorée lors du calcul des informations de contrôle,
l'unité de capteur (10) étant conçue pour saisir une information supplémentaire par l'unité de capteur de position (20), qui permet de définir de quelle manière les informations d'images d'une zone d'évaluation (A, B, C, D) sont analysées pour le calcul des informations de contrôle.

8. Unité de capteur selon la revendication 7,
**caractérisée en ce que**
l'unité de capteur (10) est conçue pour dériver l'information supplémentaire à partir de l'identification optique de l'unité de capteur de position (20).

9. Unité de capteur selon la revendication 7,
**caractérisée en ce que**
l'unité de capteur (10) comprend une unité de réception, qui est conçue pour recevoir l'information supplémentaire séparément de la saisie de l'identification optique, plus particulièrement sous la forme d'un signal radio ou infrarouge.

10. Système de contrôle de lumière, comprenant une unité de capteur multifonctionnelle (10) selon l'une des revendications 7 à 9 ainsi qu'une unité de capteur de position (20) portable.

11. Système selon la revendication 10,
**caractérisé en ce que**
l'unité de capteur de position (20) portable est un appareil radio mobile.

12. Système selon la revendication 10 ou 11,
**caractérisé en ce que**
il s'agit d'un système pour le contrôle d'un éclairage de rue.
